# FASCICULE DE BREVET EUROPEEN

(11) **EP 1 479 643 B1**
(45) Date de publication et mention de la délivrance du brevet: **18.10.2006**
(21) Numéro de dépôt: 04004780.5
(22) Date de dépôt: 01.03.2004
(51) Int. Cl.: B66F 9/08, B66F 9/16, B62B 1/14

(54) **Appareil de levage et manutention**
Hebe- und Fördervorrichtung
Hoisting and handling apparatus

(30) Priorité: 19.05.2003 FR 0305999
(43) Date de publication de la demande: 24.11.2004
(73) Titulaire: MACC, 86104 Chatellerault Cédex (FR)
(72) Inventeur: Merigot, Jean-Paul, MACC, 86104 Chatellerault Cedex (FR)

(56) Documents cités:
- US-A- 4 987 976
- US-A- 5 584 363
- US-A1- 2002 134 970

## Description

Un grand nombre de chariots, diables élévateurs manuels existent pour satisfaire des besoins différents et très variés.

Brevet FR 2 733 221 élévateur positionneur d'appareils. Ce brevet concerne un appareil avec plateau élévateur extensible sur l'avant permettant le déplacement horizontal de l'appareil à installer.

Brevet FR 2 725 972 dispositif de levage de charges dont le plateau est extensible sur l'avant.

Brevet FR 2 754 250 tablier extensible et rétractable : amélioration permettant le soulèvement de fûts de diverses hauteurs.

Brevet EP 0 889 000 A1 élévateur à fourches dont les fourches sont supportées lors de leur élévation par un dispositif de bras en X.

Certificat d'utilité FR 2 776 996 appareil de levage individuel et portable constitué d'un mât parallélépipédique sur lequel coulisse extérieurement un chariot porte fourches.

Brevet FR 2 424 225 chariot élévateur à fourches de largeur variable au moyen d'une broche filetée à deux pas inversés.

Brevet FR 2 406 601 chariot de transport. Ce brevet décrit un chariot dont le mât est un profil ouvert dans lequel se déplace un chariot mobile avec la possibilité de descendre au dessous du châssis support.

Brevet FR 2 380 201 dispositif pour la manutention d'objets lourds.

Brevet FR 2 482 938 chariot transporteur élévateur décrit un diable se transformant en chariot.

Brevet FR 2 478 611 verrou pour le mât télescopique d'un chariot élévateur à fourches.

Brevet FR 2 471 944 chariot élévateur. Ce brevet décrit un chariot élévateur manuel ou motorisé s'adaptant au format de la charge à manutentionner.

Brevet FR 2 466 429 machine à monter les chauffe-eau pour les installer en hauteur. Le brevet décrit un appareil comportant un chemin de roulement sur lequel se déplace un portique équipé d'un chariot à déplacement vertical supportant le chauffe-eau à installer.

Brevet EP 0 021 808 A1 dispositif de levage et de transport. Ce brevet décrit un dispositif de transport équipé de moyeu pour monter les marches et les escaliers.

Brevet FR 2 502 602 appareil de levage et manutention. Le brevet décrit un appareil constitué d'un socle à roulettes supportant un mât sur lequel se déplace verticalement un chariot porte charge tracté par un dispositif à câble.

Brevet FR 2 496 034 appareil de manutention du genre diable. Ce brevet décrit un diable gerbeur avec fourche socle à roulettes pivotantes.

Brevet EP 0 061 985 A2 appareil de levage et de manutention. Ce brevet décrit un appareil de levage manutention composé d'un socle à roulettes supportant un mât vertical pliant à sa base.

Brevet FR 2 523 944 appareil de levage et de manutention. Ce brevet décrit un appareil composé d'un socle en V et d'un mât articulé à la base.

Brevet FR 2 521 119 appareil de levage pour pose et dépose de chauffe-eau muraux. Ce brevet décrit un appareil de pose et dépose composé d'un socle en H sur lequel est articulé un mât pouvant être plié pour le stockage et le transport et dont le mât peut être réglé pour obtenir le parallélisme entre le produit à poser et le support.

Brevet FR 2 536 031 brouette élévatrice de manutention. Ce brevet décrit un produit destiné à la manutention des caisses de récolte.

Brevet FR 2 657 339 dispositif de levage et manutention à bras pour téléviseurs. Ce brevet décrit un appareil composé d'un socle et d'un cadre vertical sur lequel se déplace un chariot porteur d'un plateau.

Brevet FR 2 682 099 lève charge. Ce brevet décrit un appareil composé d'un socle à roulettes, d'un mât terminé à son extrémité par une potence.

Brevet WO 99/30952 diable pourvu d'un mécanisme élévateur de charges. Ce brevet décrit un diable équipé d'un dispositif permettant d'incliner la charge pour passer la plate-forme dessous.

L'appareil de levage divulgué dans le document US 2002/0134970 A1 comporte toutes les charactéristiques de l'objet du préambule de la revendication 1.

Les descriptions ci-dessus montrent bien la diversité des chariots diables élévateurs dont les applications sont souvent spécifiques à une fonction et n'allient pas la compacité du produit replié facilitant son stockage ou son transport sur le lieu d'utilisation tout en permettant une hauteur d'élévation importante.

D'autre part, ces mêmes chariots diables élévateurs ne comportent pas un système permettant le réglage de l'inclinaison de la charge.

La présente invention a pour objet de réaliser un appareil de levage et manutention repliable offrant un encombrement réduit tout en permettant son utilisation en diable.

La mise en fonction de l'appareil de levage et manutention est simple et rapide par le dépliage et le verrouillage des fourches socle ; l'appareil devenant alors stable sur son socle. Le mât unique, constitué en profilé ouvert et articulé latéralement en son milieu, peut alors être déplié et verrouillé. Le câble de traction se met en place naturellement.

Dans cette configuration, l'appareil peut être manipulé en diable car il comporte deux roues de grand diamètre et un brancard. Ce brancard est en forme de guidon se terminant de chaque côté par une crosse servant d'appui sur le sol lorsque l'appareil est en position horizontale pour le transport sur le lieu d'utilisation.

Un chariot guide sur galets situés à l'intérieur du mât supporte un tablier. Ce tablier réglable en inclinaison au moyen d'une vis à grand pas comportant un volant peut être équipé de fourches amovibles réglables en écartement. Ce réglage de l'inclinaison du tablier permet de faire concorder la face du produit à installer avec le plan support, qu'il soit vertical ou horizontal.

Pour ajuster la charge à installer avec précision avec ses points de fixation, les fourches socle sont également équipées de roulettes pivotantes multidirectionnelles.

Les fourches amovibles et réglables en écartement sur le tablier ont une forme en creux suivant leur longueur ; ce creux permettant de recevoir avec sécurité les jupes des appareils telles que les chaudières murales. Ces surfaces de contact étant étroites et longilignes, elles peuvent glisser et échapper de la surface de fourches classiques.

Pour le transport et le stockage, le mât se replie latéralement et se verrouille à l'aide d'une broche, la même broche sert au verrouillage du mât en position déployée. L'extrémité du mât comporte une poulie dans laquelle passe le câble de manoeuvre. De chaque côté de cette poulie, le câble de traction a donc une partie extérieure au mât allant vers le treuil de manoeuvre et une autre partie intérieure au mât reliée au chariot porte tablier. Au repliage du mât, ces deux parties de câble se plient en s'enroulant sur deux galets biconiques pour sa partie extérieure et sur le noeud de l'articulation du mât pour sa partie intérieure. Les deux galets biconiques servent au repliage à guider le câble extérieur et à le maintenir dans une position parfaite.

Le mât étant replié et verrouillé, les fourches socle sont alors repliées vers le mât et verrouillées. Ces fourches socle comportent les quatre roulettes pivotantes mais aussi les grandes roues permettant d'utiliser le produit en diable. Ces dernières facilitent ainsi le déplacement de l'appareil replié.
La figure 1 représente l'appareil replié en perspective.
La figure 2 représente l'appareil déplié en perspective
La figure 3 représente une vue partielle et en perspective du mât replié au niveau de son articulation et de son verrouillage.
La figure 4 représente une vue partielle et en perspective du mât déplié au niveau de son articulation et de son verrouillage.
La figure 5 représente en perspective partielle le tablier seul et sa vis et volant de réglage vus de l'avant.
La figure 6 représente en perspective le tablier et sa vis et volant de réglage vus de l'arrière.
La figure 7 représente en perspective le verrouillage des fourches socle.
La figure 8 représente en perspective partielle les fourches socle verrouillées.
La figure 9 représente en perspective partielle l'ensemble mât- châssis-brancard replié et verrouillé sur les fourches socle.
La figure 10 représente en perspective une fourche amovible.
La figure 11 représente en coupe une fourche amovible.

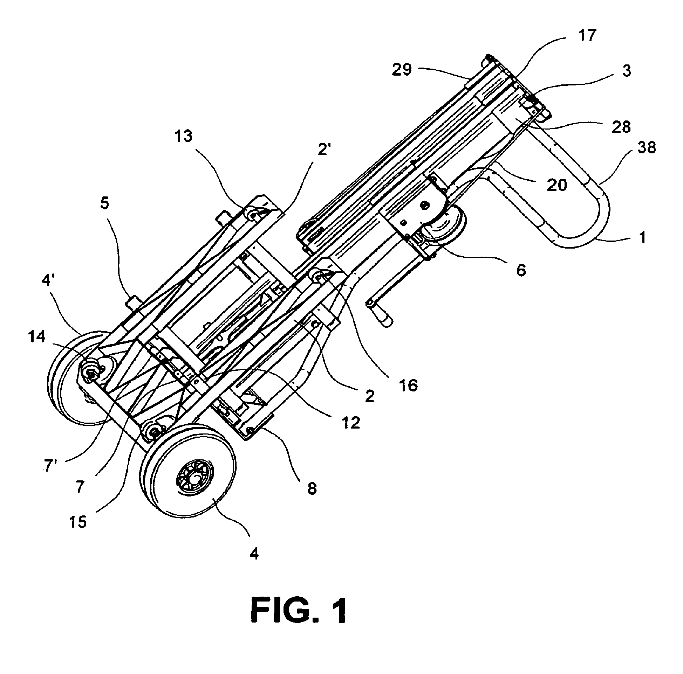

Selon les figures 1, 2, 7 et 8, l'appareil de levage se compose d'un châssis-brancard (1), de fourches socle (2) (2') articulées (en 7) (7') sur une platine (8) sur laquelle sont solidaires le mât (3) et le châssis - brancard (1 ).

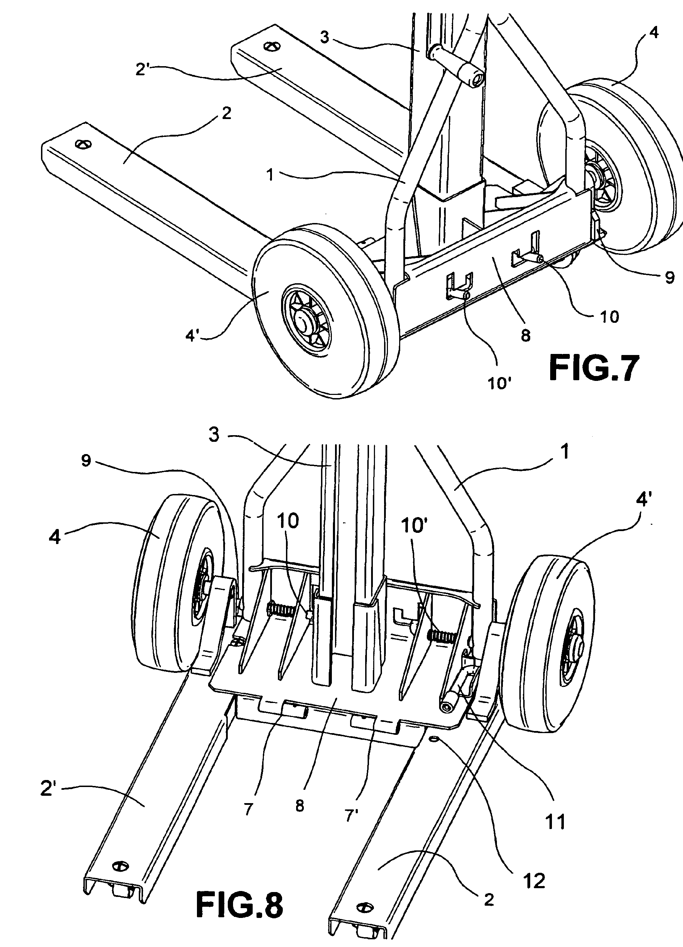

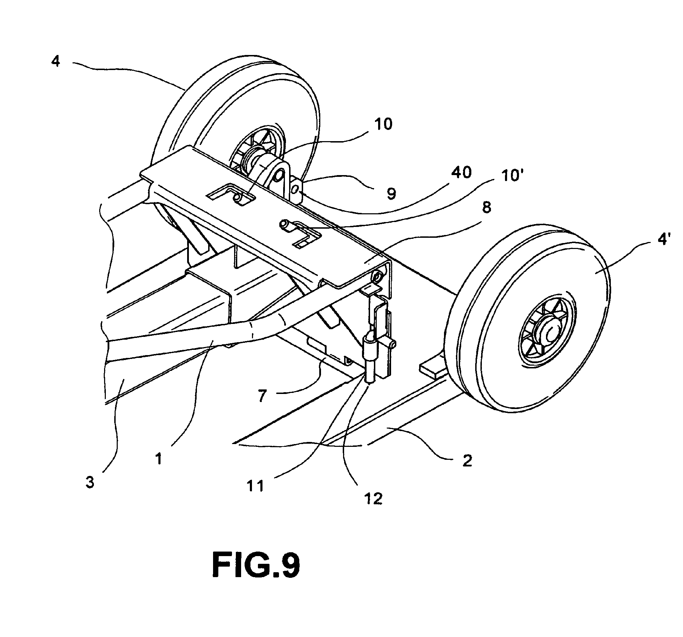

Selon les figures 7, 8, 9, l'ensemble mât (3), châssis-brancard (1) et platine (8) vient se verrouiller sur l'ensemble fourches socle (2) (2') au moyen de deux verrous à ressort (10) (10') qui viennent se loger dans un orifice (40) prévu dans les plats (9) (9') solidaires des fourches socle (2) (2'). L'appareil de levage et manutention se trouve alors en position d'utilisation.

Selon les figures 1, 8 et 9, les fourches socle (2) (2') sont immobilisées en position repliée contre le mât (3) au moyen d'un verrou (11) solidaire de la platine (8) et qui vient se loger dans cette position dans un orifice (12) prévu sur la fourche socle (2). Pour déployer les fourches socle (2) (2') il suffit alors de libérer le verrou (11) de l'orifice (12) de la fourche socle (2).

Selon la figure 1, l'appareil de levage et manutention replié peut être manipulé en diable car il comporte deux roues (4) (4') de grands diamètres et un châssis - brancard (1). Ce châssis - brancard (1) est en forme de guidon se terminant de chaque côté par une crosse (38).

Selon la figure 1, les fourches socle (2) (2') sont équipées de quatre roulettes pivotantes (13) (14) (15) (16) ; ces roulettes permettant l'orientation multidirectionnelle de l'appareil de levage.

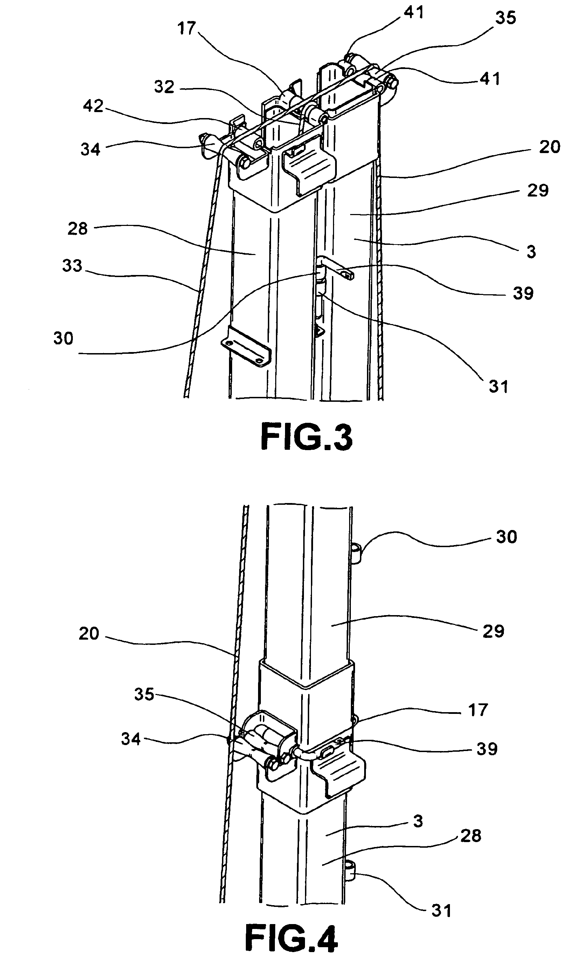

Selon les figures 1, 2, 3 et 4, le mât (3) solidaire du châssis - brancard (1) et de la platine (8) est articulé latéralement (en 17) et se verrouille en position repliée à l'aide de la broche (39). Cette même broche (39) sert au verrouillage en position déployée et vient se loger dans la double douille (41) et dans la douille (42) prévues respectivement sur la partie supérieure (29) du mât (3) et sur la partie inférieure (28) du même mât (3). Cette particularité permet à la fois de réduire l'encombrement de l'appareil de levage et manutention pendant son stockage ou son transport, de l'utiliser comme diable tout en offrant une hauteur importante d'élévation.

Selon les figures 1, 2, 3 et 8, ce mât (3) est constitué d'un profil ouvert vers l'avant en forme de C.

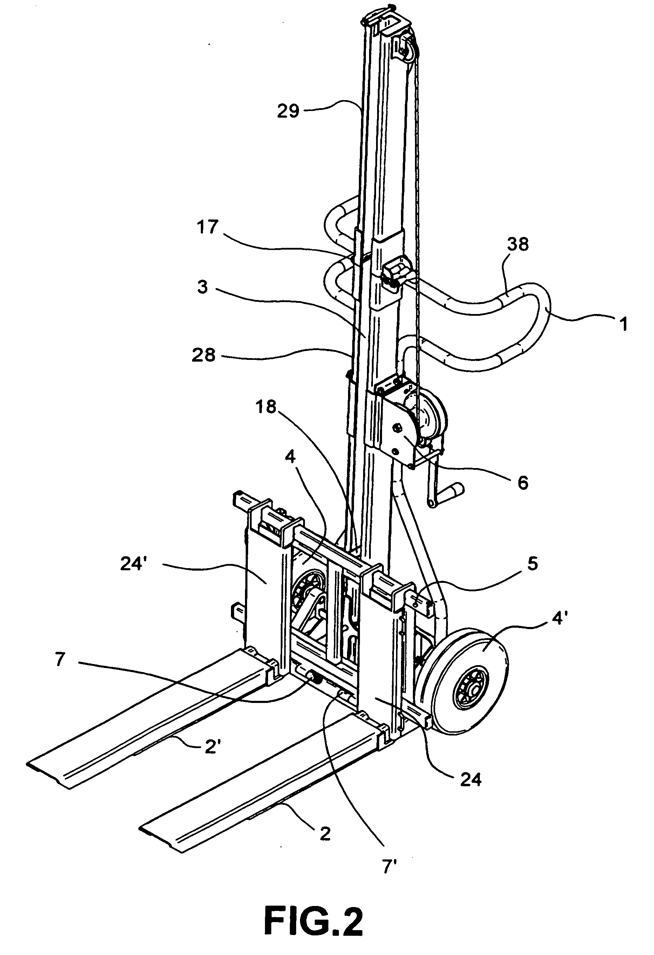

Selon les figures 2, 3, 4, 5 et 6, à l'intérieur du mât (3) vient coulisser un chariot (18) équipé de huit galets (19). Ce chariot (18) peut se déplacer dans le mât (3) sous l'action d'un câble de traction (20) enroulé ou déroulé au moyen d'un treuil (6) solidaire du mât (3) et du châssis-brancard (1).

Toujours selon les figures 2, 3, 4, 5 et 6, le chariot (18) comporte un tablier (5). Ce tablier est constitué d'une partie fixe (21) solidaire du chariot (18). Sur cette partie fixe (21) est articulée une partie mobile (23) autour de deux axes (22) (22'). Cette partie mobile (23) reçoit sur sa partie supérieure les deux fourches amovibles (24) (24').

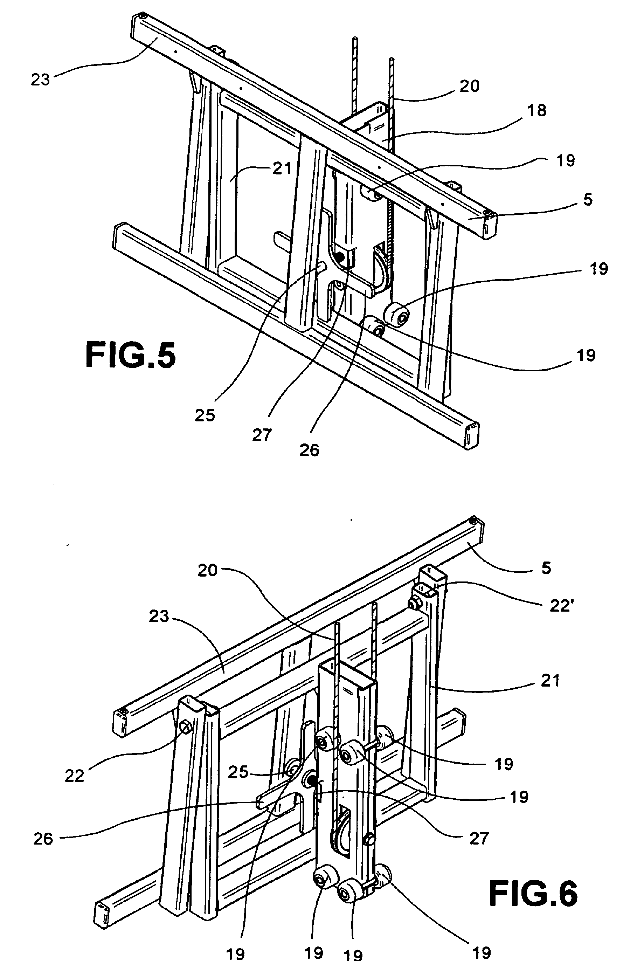

Suivant les figures 5 et 6, la partie mobile (23) du tablier (5) peut être réglée à volonté en inclinaison à l'aide de la vis (25) dont la manoeuvre s'effectue au moyen du volant (26). Cette vis (25) en se vissant plus ou moins dans l'écrou (27) solidaire de la partie fixe (21) pousse sur la partie mobile (23) et la fait tourner autour des deux axes (22) (22') lui donnant ainsi l'inclinaison souhaitée et par la même aux deux fourches amovibles (24) (24') portées par cet élément. Une charge posée sur ces mêmes fourches amovibles (24) (24') peut donc prendre l'obliquité souhaitée que ce soit pour la fixer sur un mur ou sur un autre élément.

Selon les figures 1, 2, 3 et 4, le mât (3) se replie en position transport ou utilisation en diable. Après avoir déverrouillé le mât (3), la partie supérieure (29) du mât (3) articulée (en 17) se rabat sur la partie inférieure (28) dudit mât (3).

Une douille (30) solidaire de la partie supérieure (29) du mât (3) vient en concordance avec une autre douille (31) solidaire de la partie inférieure (28) du mât (3). Un verrouillage de la partie supérieure (29) et de la partie inférieure (28) repliées est donc obtenu à l'aide de la broche (39) qui vient se loger dans les douilles (30) et (31).

Toujours selon les figures 1, 2, 3 et 4, le pliage du mât (3) se traduit par une tension du câble de traction (20) compensée par une légère remontée du chariot (18) solidaire de l'extrémité de la partie intérieure (32) dudit câble de traction (20). Lors de l'opération de pliage du mât (3) la partie intérieure (32) du câble de traction (20) vient automatiquement envelopper l'articulation (17) pendant que sa partie extérieure (33) dudit câble de traction (20) vient automatiquement s'appliquer au centre des deux galets de guidage (34) et (35) de forme biconique. Ces dispositions permettent de maintenir le câble de traction (20) dans sa bonne position tout en évitant tout contact avec les arêtes vives du mât (3).

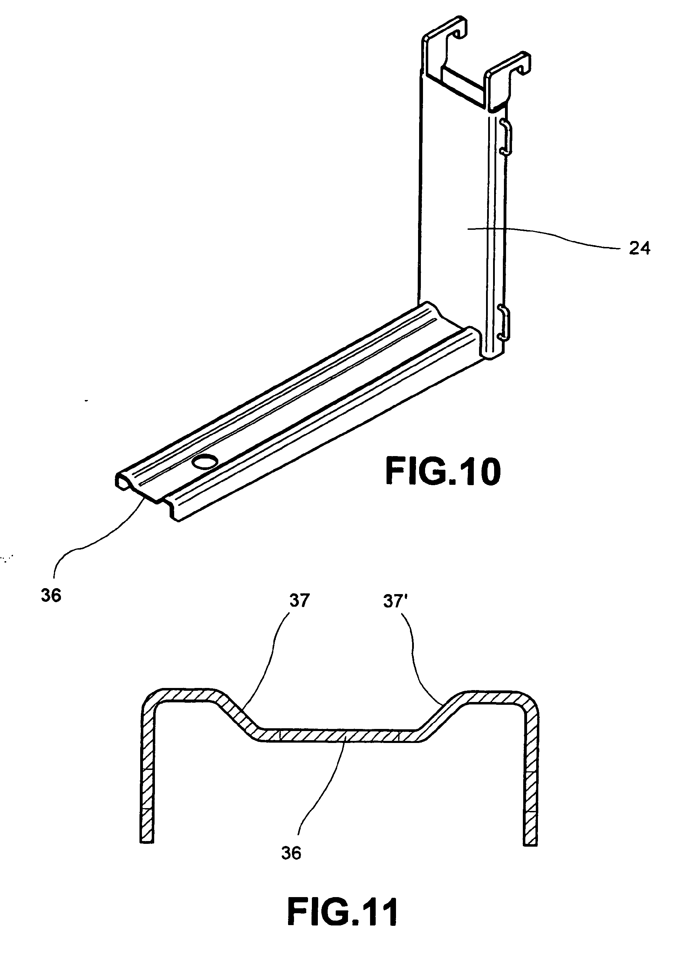

Selon les figures 10 et 11, les fourches amovibles (24) (24') ont leur surface d'appui réalisée en M. Cette forme autorise l'appui de grandes surfaces planes ou des surfaces étroites telles que les jupes latérales de chaudières murales. Celles-ci viennent alors prendre appui sur la forme en creux (36) tout en étant guidées par les plis (37) (37') pour éviter qu'elles glissent latéralement. Seul est autorisé un glissement longitudinal permettant la fixation des chaudières murales ou autre.

## Revendications

1. Appareil de levage et manutention composé d'une platine (8), d'un châssis-brancard (1) solidaire de la platine (8), d'un mât (3) constitué d'un profil ouvert en forme de C solidaire de la platine (8) et du châssis-brancard (1), de deux roues (4) (4'), de deux fourches socle (2) (2') équipées de quatre roulettes pivotantes multidirectionnelles (13) (14) (15) (16), d'un chariot (18) coulissant au moyen de huit galets (19) dans le mât (3) et supportant un tablier (5) sur lequel s'adapte deux fourches amovibles (24) (24') et dont l'élévation est obtenue au moyen d'un système de mouflage d'un câble de traction (20) relié au chariot (18) et actionné par un treuil (6) solidaire du mât (3) et du châssis-brancard (1), **caractérisé en ce que** le mât (3) comporte deux parties, une partie supérieure (29) pourvue d'une douille (30) qui vient se replier sur sa partie inférieure (28) pourvue d'une douille (31), l'une ou l'autre de ces deux positions dudit mât (3) soit repliée soit déployée étant obtenue au moyen d'une même broche (39) qui s'engage soit dans la double douille (41) solidaire de la partie supérieure (29) du mât (3) et la douille (42) solidaire de la partie inférieure (28) du mât (3), le pliage du mât (3) provoque une tension du câble de traction (20) compensée par une légère remontée du chariot (18) relié au câble de traction (20), dont la partie intérieure (32) située à l'intérieure du mât (3) vient automatiquement envelopper l'articulation (17) pendant que sa partie extérieure (33) située à l'extérieur du mât (3) vient automatiquement s'appliquer au centre des deux galets de guidage (34) (35) de forme biconique.

2. Appareil de levage et manutention, suivant revendication 1, **caractérisé en ce que** le chariot (18) comporte un tablier (5) lui-même constitué d'une partie fixe (21) et d'une partie mobile (23) articulée autour de deux axes (22) (22') solidaires de la partie fixe (21) et actionnée au moyen d'un écrou (27) solidaire sur la partie fixe (21) recevant une vis (25) actionnée au moyen d'un volant (26) qui agit sur la tête de la vis (25) venant alors pousser la partie mobile (23) pour obtenir l'inclinaison souhaitée.

3. Appareil de levage et manutention, suivant revendications 1 et 2, **caractérisé en ce que** la partie supérieure de la partie mobile (23) du tablier (5) reçoit deux fourches amovibles (24) (24') destinées à supporter les charges à élever tout en prenant la position plus ou moins inclinée du tablier (5) et en offrant une surface d'appui qui possède un creux (36) en son centre et des plis (37) (37') de guidage de chaque côté du creux (36).

4. Appareil de levage et manutention, suivant revendication 1, **caractérisé en ce que** les fourches socle (2) (2') articulées en (7) (7') sont maintenues en position dépliée d'utilisation par deux verrous à ressort (10) (10') s'insérant dans les orifices (40) des plats (9) solidaires des extrémités de la fourche socle (2), et en position repliée grâce aux mêmes articulations (7) (7') après avoir déverrouillé les deux verrous à ressort (10) (10'), le maintien dans cette position repliée se fait par un verrou (11) solidaire de la platine (8) qui vient s'insérer dans un orifice (12) prévu à l'extrémité de la fourche socle (2).

5. Appareil de levage et manutention, suivant revendication 1, **caractérisé en ce que** les poignées du châssis - brancard (1) sont courbées de façon à obtenir une crosse (38) facilitant la préhension et l'utilisation en tant que châssis - brancard (1) servant d'appui sur le sol lorsque l'appareil est en position horizontale.

## Claims

1. Hoisting and handling apparatus comprising a panel (8), a carrier frame (1) integral with the panel (8), a mast (3) consisting of an open C-shaped section integral with the panel (8) and to the carrier frame (1), two wheels (4) (4'), two base forks (2) (2') equipped with four multidirectional swivel casters (13) (14) (15) (16), a carriage assembly (18) sliding by means of eight rollers (19) inside the mast (3) and supporting a carriage bar (5) to which two removable forks (24) (24') are fitted and which is elevated by means of the reeving system of a traction cable (20) connected to the carriage assembly (18) and actuated by a winch (6) integral with the mast (3) and to the carrier frame (1), **characterised in that** the mast (3) comprises two parts, an upper part (29) provided with a sleeve (30) which folds down over the lower part (28) provided with a sleeve (31), with either position of said mast (3) - either folded or extended - being obtained by means of the same pin (39) which is inserted either in the double sleeve (41) integral with the upper part (29) of the mast (3) or in the sleeve (42) integral with the lower part (28) of the mast (3); the folding of the mast (3) generates tension in the traction cable (20) compensated by a slight rise in the carriage assembly (18) linked to the traction cable (20), the inner section (32) of which, situated inside the mast (3), envelops the hinge (17) automatically whereas its outer section (33), situated outside the mast (3), is placed automatically in the centre of the two double-cone guide rollers (34) (35).

2. Hoisting and handling apparatus according to claim 1, **characterised in that** the carriage assembly (18) comprises a carriage bar (5) which is itself made up of a fixed section (21) and a moving section (23) swivelling around two pins (22) (22') integral with the fixed section (21) and actuated by means of a nut (27) integral with the fixed section (21) which receives a screw (25) actuated by means of a handwheel (26) driving the head of the screw (25) which then pushes the moving section (23) to obtain the required angle of inclination.

3. Hoisting and handling apparatus according to claims 1 and 2, **characterised in that** the upper part of the moving section (23) of the carriage bar (5) receives two removable forks (24) (24') designed to support the loads to be lifted while adopting the more or less inclined position of the carriage bar (5) and offering a bearing surface which has a recess (36) in the centre and guiding creases (37) (37') on either side of the recess (36).

4. Hoisting and handling apparatus according to claim 1, **characterised in that** the base forks (2) (2') hinged at (7) (7') are held in the extended working position by two spring latches (10) (10') inserting into orifices (40) in the flat sections (9) integral with the ends of the base fork (2), and in the folded position thanks to the same hinges (7) (7') after releasing the two spring latches (10) (10'), the forks being held in this folded position by means of a catch (11) integral with the panel (8) which inserts into an orifice (12) provided at the end of the base fork (2).

5. Hoisting and handling apparatus according to claim 1, **characterised in that** the handles of the carrier frame (1) are curved in such a way as to form a crook shape (38) to provide an easier grip and to facilitate use as a carrier frame (1) acting as a bearing surface on the floor when the apparatus is in the horizontal position.

## Patentansprüche

1. Hebe- und Fördervorrichtung bestehend aus einer Grundplatte (8), einer mit der Grundplatte (8) fest verbundenen Gabeldeichsel (1), einem aus einem offenen C-förmigen Profil gebildeten und mit der Grundplatte (8) sowie der Gabeldeichsel (1) fest verbundenen Hubmast (3), zwei Rädern (4) (4'), zwei mit vier schwenkbaren multidirektionalen Rollen (13) (14) (15) (16) ausgestatteten Bodengabeln (2) (2'), einen mittels acht Walzen (19) im Hubmast (3) gleitenden und eine Förderplatte (5) tragenden Support (18), auf der sich zwei abnehmbare Gabeln (24) (24') anpassen lassen und deren Anheben mittels eines Seilzugsystems mit einem Zugseil (20) erreicht wird, das mit dem Support (18) verbunden ist und von einer Winde (6) betätigt wird, die mit dem Hubmast (3) und der Gabeldeichsel (1) fest verbunden ist, **dadurch gekennzeichnet, dass** der Hubmast (3) zwei Teile umfasst - einen oberen Teil (29) mit einer Buchse (30), der sich auf dem unteren mit einer Buchse (31) versehenen Teil (28) zusammenklappen lässt, wobei die eine oder andere dieser beiden Stellungen des besagten Hubmasts (3), d. h. zusammen- bzw. auseinandergeklappt, mittels eines selben Stifts (39) erreicht wird, der entweder in die mit dem oberen Teil (29) des Hubmasts (3) fest verbundene Doppelbuchse (41) oder in die mit dem unteren Teil (28) des Hubmasts (3) fest verbundene Buchse (42) gesteckt wird, wobei das Zusammenklappen des Hubmasts (3) eine Spannung des Zugseils (20) verursacht, die durch ein leichtes Hochfahren des mit dem Zugseil (20) verbundenen Supports (18) kompensiert wird, dessen innerer Teil (32) innerhalb des Hubmastes (3) automatisch das Gelenk (17) umhüllt, während sein äußerer Teil (33) außerhalb des Hubmastes (3) automatisch auf die Mitte der beiden doppelkonischen Führungswalzen (34) (35) einwirkt.

2. Hebe- und Fördervorrichtung nach Anspruch 1, **dadurch gekennzeichnet, dass** der Support (18) eine Förderplatte (5) umfasst, die selbst aus einem festen Teil (21) und einem beweglichen Teil (23) besteht, der ausschwenkbar um die beiden mit dem festen Teil (21) fest verbundenen Achsen (22) (22') angeordnet ist und mittels einer mit dem festen Teil (21) fest verbundener Mutter (27) betätigt wird, die eine Schraube (25) aufnimmt, welche mittels eines Schwungrads (26) betätigt wird, das auf den Kopf der Schraube (25) einwirkt und dabei gegen den beweglichen Teil (23) drückt, um die gewünschte Neigung zu erreichen.

3. Hebe- und Fördervorrichtung nach Anspruch 1 und 2, **dadurch gekennzeichnet, dass** der obere Bereich des beweglichen Teils (23) der Förderplatte (5) zwei abnehmbare Gabeln (24) (24') aufnimmt, die dazu bestimmt sind, die hochzuhebenden Lasten zu tragen und dabei die mehr oder minder geneigte Stellung der Förderplatte (5) einnehmen und eine Auflagefläche mit einer Vertiefung (36) in der Mitte und auf jeder Seite der Vertiefung (36) Führungsfurchen (37) (37') gewährleisten.

4. Hebe- und Fördervorrichtung nach Anspruch 1, **dadurch gekennzeichnet, dass** die an (7) (7') gelenkig angeordneten Bodengabeln (2) (2') durch zwei Federriegel (10) (10'), die sich in die Öffnungen (40) der fest mit den Enden der Bodengabel (2) verbundenen Flacheisen einschieben lassen, in ausgeklappter Arbeitsstellung gehalten werden, sowie, nachdem man die beiden Federriegel (10) (10') entriegelt hat, durch dieselben Gelenkverbindungen (7) (7') in zusammengeklappter Stellung, wobei der Halt in dieser zusammengeklappten Stellung durch einen fest mit der Grundplatte (8) verbundenen Riegel (11) gewährleistet wird, der sich in eine am Ende der Bodengabel (2) vorgesehene Öffnung (12) einschieben lässt.

5. Hebe- und Fördervorrichtung nach Anspruch 1, **dadurch gekennzeichnet, dass** die Griffe der Gabeldeichsel (1) so gewölbt sind, dass sie ein Querteil (38) bilden, das das Ergreifen und die Benutzung als Gabeldeichsel (1) erleichtern, die als Auflage am Boden dient, wenn die Vorrichtung in waagrechter Stellung ist.
